# FASCICULE DE BREVET EUROPEEN

(11) **EP 0 699 556 B1**
(45) Date de publication et mention de la délivrance du brevet: **03.03.1999**
(21) Numéro de dépôt: 95113684.5
(22) Date de dépôt: 31.08.1995
(51) Int. Cl.: B60N 3/14

(54) **Corps d'allumage pour allume-cigares, notamment pour véhicules automobiles**
Zigarettenanzünderkörper, insbesondere für Kraftfahrzeuge
Cigarette lighter body, especially for motor vehicles

(30) Priorité: 02.09.1994 FR 9410744
(43) Date de publication de la demande: 06.03.1996
(73) Titulaire: VALEO VISION, 93000 Bobigny (FR)
(72) Inventeur: Thivet, Gilles, F-81290 Labruguiere (FR)
(74) Mandataire: Gamonal, Didier

(56) Documents cités:
- EP-A- 0 200 247
- EP-A- 0 398 063
- EP-A- 0 434 519
- EP-A- 0 437 250
- EP-A- 0 495 720
- DE-A- 1 950 768
- FR-A- 2 272 343
- FR-A- 2 502 078
- FR-A- 2 684 053
- US-A- 3 424 414
- US-A- 4 713 733
- US-A- 5 233 162

## Description

La présente invention concerne les corps d'allumage pour allume-cigares, notamment pour véhicules automobiles, comportant une douille électriquement conductrice fermée par un fond, un organe de fixation traversant ledit fond, un organe de prise de courant monté à l'intérieur de la douille et relié électriquement par l'organe de fixation à une première pièce d'alimentation électrique montée à l'extérieur de la douille, une première pièce d'isolation électrique interposée entre l'organe de prise de courant et le fond de la douille, une seconde pièce d'alimentation électrique montée à l'extérieur de la douille en étant adjacente au fond de celle-ci et reliée électriquement à ladite douille, une seconde pièce d'isolation électrique interposée entre la première et la seconde pièce d'alimentation électrique, un élément de sécurité présentant une languette de sécurité globalement d'orientation axiale propre à établir un court-circuit en cas de surchauffe du corps d'allumage, ledit organe de fixation traversant les pièces d'isolation électrique pour assemblage des pièces d'alimentation électrique et de l'organe de prise de courant avec la douille.

Un tel corps est décrit dans le document FR-A-2 502 078.

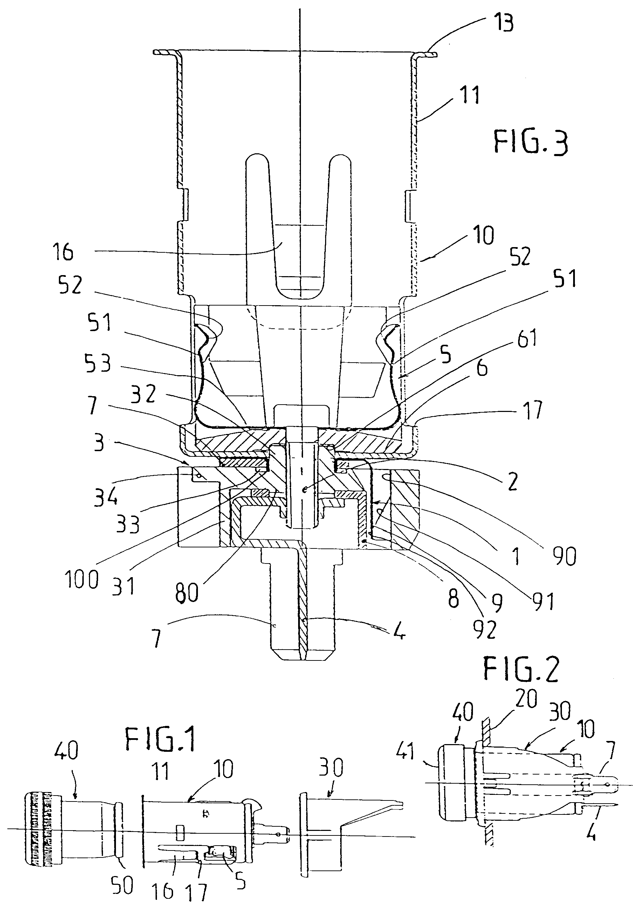

Ce corps 10 (figure 1) sert, grâce à sa douille 11, de réceptacle à un bouchon de préhension amovible 40 présentant une coupelle 50 logeant un corps de chauffage tel qu'une résistance chauffante.

La douille 11 est destinée à être fixée sur une paroi fixe 20 du véhicule, par exemple la planche de bord ou une console de celui-ci, soit directement, soit par une bague conductrice de lumière 30.

Normalement le bouchon 40 est maintenu en position d'attente dans la douille 11 à l'aide de languettes 16 découpées dans celle-ci à la faveur chacune d'une fente 17 permettant une dilatation des lames du bilame 5 constituant usuellement l'organe de prise de courant.

Pour allumer, par exemple une cigarette, l'occupant du véhicule enfonce le bouton mobile 41, que comporte le bouchon 40, pour que la coupelle 50 vienne en prise avec le bilame 5.

Un circuit électrique, permettant le chauffage du corps de chauffage, est alors établi à l'aide des pièces d'alimentation électrique 4,7 reliées aux bornes de la batterie du véhicule. Lorsque le corps de chauffage atteint une température suffisante les lames du bilame se dilatent pour interrompre ledit circuit.

Dans certains cas ces lames peuvent rester en prise avec la coupelle 50 malgré que le corps de chauffage ait atteint la température suffisante.

Ceci peut être une cause d'incendie du fait notamment que la paroi 20 et la bague 30 sont usuellement en matière plastique.

C'est pour cette raison qu'on a prévu un élément de sécurité, qui dans le document FR-A-2 502 078, consiste en une languette constituant un contacteur bimétallique faisant partie intégrante du bilame ou indépendante de celui-ci. Cette languette est propre à venir en contact avec la douille pour établir un court-circuit franc provoquant alors une augmentation importante du courant électrique, ce qui fait sauter immédiatement les fusibles de protection de l'allume-cigares et empêche que le maintien du corps de chauffage en position de chauffage ne produise un incendie.

En pratique cette languette s'étend axialement en direction de l'extrémité ouverte de la douille, en sorte qu'elle peut être endommagée lorsque l'on introduit le bouchon ou une autre fiche de courant dans la douille.

Pour cette raison on peut songer, à la lumière du document EP-A-0 200 247, à orienter la languette de sécurité vers le fond de la douille.

Pour une même position de l'organe de prise de courant, cela nécessite d'augmenter la longueur axiale de la douille et de la première pièce d'isolation électrique si l'on veut ne pas changer le bouchon de l'allume-cigares.

Pour cette raison on peut songer à utiliser une disposition voisine de celle décrite dans le document DE-A-1 950 768, la languette de sécurité étant alors montée à l'extérieur de la douille pour venir en contact avec une enveloppe métallique de fixation entourant la douille en étant fixée à celle-ci par vissage. Cette languette est isolée par rapport à la douille.

Tout ceci complique la fabrication du corps d'allumage. En outre cet élément de sécurité est sensible à la température de l'organe de prise de courant via l'organe de fixation, le flux thermique n'est donc pas très important.

La présente invention a pour objet de pallier ces inconvénients de manière simple et économique.

Suivant l'invention un corps d'allumage du type susindiqué est caractérisé en ce que l'élément de sécurité est en contact avec la seconde pièce d'alimentation électrique, en ce que l'ensemble seconde pièce d'alimentation électrique - élément de sécurité est interposé axialement entre le fond de la douille et la seconde pièce d'isolation électrique et en ce que, pour établissement d'un court-circuit, la languette de sécurité est propre à coopérer avec une partie de contact reliée électriquement à la première pièce d'alimentation électrique.

Grâce à l'invention la languette de sécurité est reliée extérieurement électriquement et thermiquement à la douille. Cette languette est donc sensible au flux thermique de la douille de grande surface, qui s'échauffe principalement par rayonnement thermique, lorsque le bouchon, ou une fiche de courant, reste accidentellement en prise avec l'organe de prise de courant. La température atteinte par la douille est donc moindre que celle existante au niveau de l'organe de prise de courant et compte tenu que l'élément de sécurité est adjacent à la douille, on obtient, grâce notamment au flux thermique important s'écoulant dans la douille, un déclenchement précis de la languette de sécurité pour obtenir un court-circuit. Cette languette de sécurité est également bien isolée de la première pièce d'alimentation et de l'organe de fixation par la deuxième pièce d'isolation électrique.

En outre l'élément de sécurité est de faible épaisseur en sorte qu'il n'y a pas à modifier la longueur de l'organe de fixation.

Axialement on peut donner à la languette de sécurité la taille requise.

De plus cela ne nécessite pas de modifier de manière profonde le corps d'allumage, sa douille demeurant inchangée ainsi que l'organe de prise de courant et la première rondelle d'isolation électrique.

On peut donc implanter facilement l'élément de sécurité sur un corps d'allumage existant par modification de la seconde pièce d'isolation électrique avantageusement en matière moulable.

De préférence l'élément de sécurité est en contact avec le fond de la douille.

Il est ainsi encore plus sensible au flux thermique de la douille. Son temps de réponse (ou de déclenchement) est donc réduit.

Bien entendu l'élément de sécurité peut être interposé entre la seconde pièce d'alimentation électrique, en contact avec le fond de la douille, et la deuxième pièce d'isolation électrique.

Dans tous les cas on tire parti de cette deuxième pièce d'isolation électrique pour lui donner aisément par moulage, de manière simple et économique, la forme appropriée pour le montage de l'élément de sécurité, et de la partie de contact.

Ainsi dans une forme de réalisation la partie de contact associée à la première pièce d'alimentation électrique est distincte de celle-ci en étant positionnée aisément par la deuxième pièce d'isolation électrique. Ainsi on ne modifie pas la première pièce d'alimentation électrique et il en est de même globalement de la seconde pièce d'alimentation électrique.

La partie de contact peut être donc en métal plus économique et avoir l'épaisseur et la forme voulue. Bien entendu la partie de contact peut être d'un seul tenant avec la première pièce d'alimentation électrique. Tout cela dépend des applications, notamment du bilan économique.

Avantageusement l'élément de sécurité traverse la deuxième pièce d'isolation électrique pour venir, en fonctionnement normal, en appui sur une saillie portée par ladite deuxième pièce d'isolation électrique.

On peut régler ainsi de manière précise la distance entre la languette de sécurité et sa partie de contact associée reliée à la première pièce d'alimentation électrique et ce en ayant une languette de sécurité fine.

L'établissement du court-circuit est réalisé ainsi de manière encore plus précise, avec une meilleure maîtrise et un très bon positionnement de la languette de sécurité, qui ne peut se déplacer que dans un seul sens.

Avantageusement on monte la languette de sécurité sous précontrainte pour diminuer les phénomènes de dispersion et réaliser de manière plus sûre le court-circuit.

On appréciera que la deuxième pièce d'isolation électrique peut être dotée aisément d'une ceinture pour masquer la pièce de contact et la languette de sécurité.

Grâce à ceci ces pièces sont protégées, notamment lors du transport ou du stockage de l'allume-cigares.

En outre, lorsque l'on branche le connecteur d'alimentation sur les pièces d'alimentation électriques, on ne risque pas également d'endommager la languette de sécurité et la pièce de contact.

Ainsi la languette de sécurité peut avoir une épaisseur très fine bien adaptée à la température de la douille en cas de surchauffe.

La description qui va suivre illustre l'invention en regard des dessins annexés dans lesquels :
- la figure 1 est une vue en perspective éclatée d'un allume-cigares de l'art antérieur ;
- la figure 2 est une vue de l'allume-cigares de la figure 1 monté sur sa paroi fixe de support associé ;
- la figure 3 est une vue en coupe axiale d'un corps d'allumage selon l'invention, sans sa bague éclairante ;
- la figure 4 est une vue en coupe partielle analogue à la figure 3 avec présence de la bague éclairante ;
- la figure 5 est une vue analogue à la figure 3 pour un autre exemple de réalisation ;
- la figure 6 est une vue selon la flèche 6 de la figure 5.

Dans les figures 3 à 6 les mêmes références sont utilisées pour les éléments communs à l'invention et à ceux de l'art antérieur.

Ainsi le corps d'allumage 10 de l'allume-cigares, ici pour véhicules automobiles, comporte une douille 11 électriquement conductrice fermée par un fond 12 troué ici centralement.

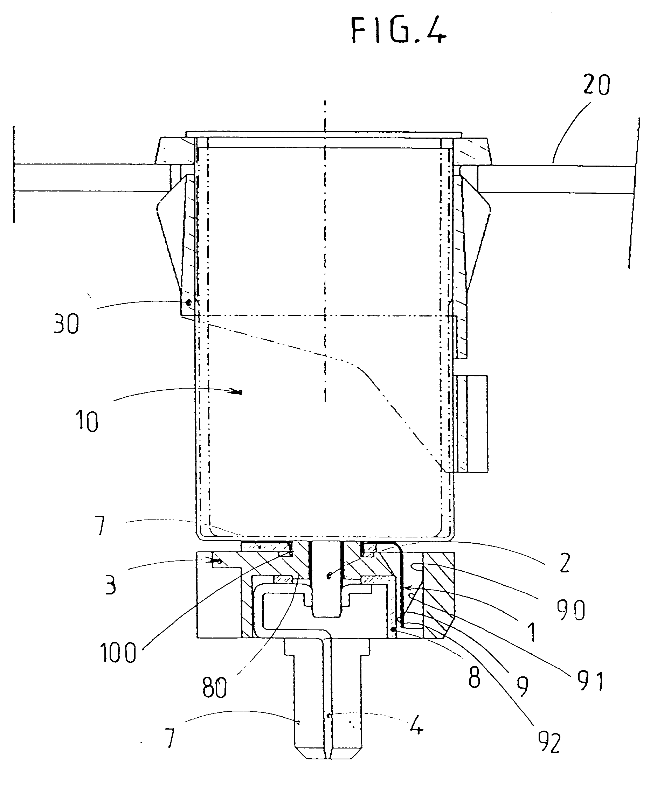

La douille 11, de forme cylindrique, est ici en tôle emboutie et porte la majeure partie des pièces du corps d'allumage en étant, dans les figures 4 à 6, montée à l'intérieur de la bague 30 éclairante en matière plastique. Elle présente des languettes 16 de maintien du bouchon 40 des figures 1 et 2 en position d'attente.

La douille 11 porte des pièces en matière électriquement conductrices, ici du type métallique, à savoir un organe de prise de courant 5 sous forme ici d'un bilame 5, un organe de fixation 2, ici une vis, une première pièce d'alimentation électrique 4 et une seconde pièce d'alimentation électrique 7 ici en forme de languettes plates et minces.

Elle porte également des pièces électriquement isolantes 6,3, avantageusement en matière synthétique moulable telle que de la matière plastique.

Une première 6 des pièces électriquement isolante 6,3, dite première pièce isolante, est montée à l'intérieur de la douille 11 au contact du fond 12 en étant avantageusement en matière également thermiquement isolante. Cette première pièce isolante 6 porte le bilame 5 monté également dans la douille 11 à serrage entre la tête de la vis métallique 2 et la première pièce isolante formant un porte-bilame 6.

Le porte-bilame 6 forme donc une entretoise interposée axialement entre le fond 12 et le bilame 5, plus précisément entre la base 53 en forme de disque du bilame 5 et le fond 12.

Pour cette raison la face supérieure du porte-bilame 6 est bombée pour contact local avec la base 53 du bilame 5 en forme de U présentant deux languettes 51 globalement d'orientation axiale implantées en face des fentes 17 de dégagement de la douille 11. Chaque languette 51 présente une extrémité libre en forme de crochet 52 pour formation d'une pince retenant la coupelle 50 du bouchon 40 de la figure 1 en position de chauffage.

Les pièces 4,7,3 sont montées à l'extérieur de la douille du côté de la face externe du fond 12.

Plus précisément la deuxième pièce d'alimentation électrique 7 (la languette 7) est ici en forme d'équerre et comporte une base horizontale parallèle au fond 12 en étant reliée électriquement à la douille 11 et une partie d'orientation axiale traversant la deuxième pièce d'isolation électrique 3, dite deuxième pièce isolante, à la faveur, de manière connue en soi, d'une échancrure en sorte qu'un blocage en rotation est réalisé entre la languette 7 et la pièce 3.

Cette languette 7 est propre à être reliée à la borne négative de la source de tension du véhicule, ici la batterie de celui-ci, et est adjacente par sa base au fond 12.

La première pièce d'alimentation électrique 4 (la languette 4) comporte également une base horizontale parallèle au fond 12 et une partie d'orientation axiale raccordée par un coude de raccordement en forme de L à sa base.

La languette 4 est propre à être reliée à la borne positive de la batterie.

La base de la pièce 4 est dotée centralement d'une cheminée taraudée pour vissage de l'extrémité de la vis 2 de serrage des pièces 5,6,7,3,4.

La deuxième pièce isolante 3 forme une entretoise interposée entre les languettes 4,7 et présente à cet effet un fond horizontal 34 formant entretoise axiale entre les bases des languettes 4,7 et traversé centralement par la vis 2.

Le fond 34 porte d'un seul tenant une douille centrale 32 traversée par la vis 2. Cette douille 32 est à la figure 3 de section rectangulaire, ou polygonale et traverse de manière complémentaire le trou central du fond 12 pour s'engager de manière complémentaire dans une creusure centrale 61 ménagée dans la première pièce isolante 6.

L'échancrure précitée de passage et de blocage en rotation de la languette 7 est ménagée dans le bord du fond 34.

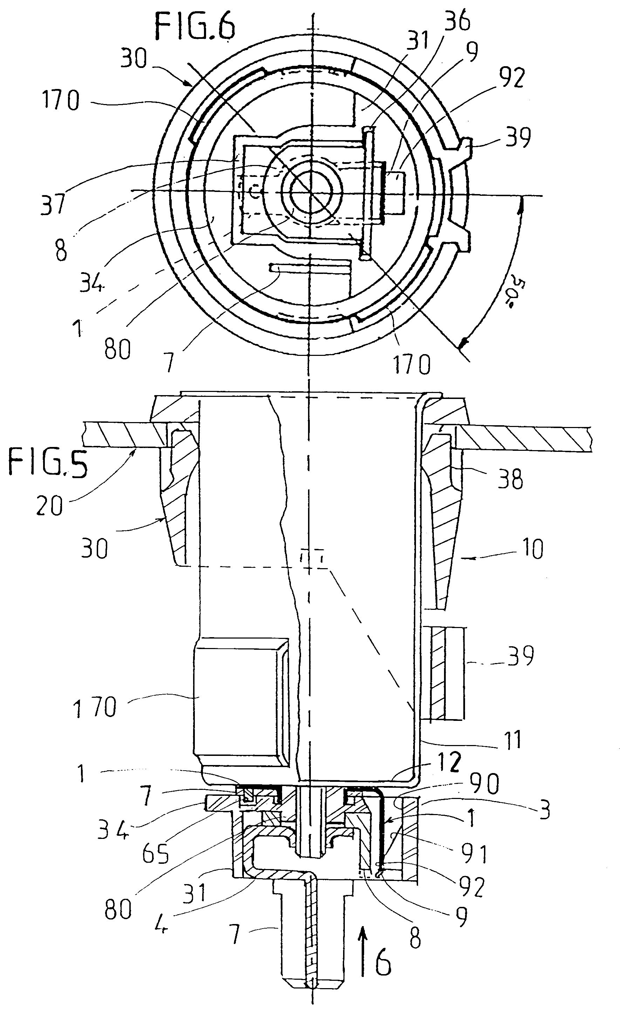

Le fond 34 est prolongé vers l'extérieur, du côté opposé au fond 12, par une ceinture d'orientation axiale 31 épousant la forme du coude de raccordement de la languette 4. La deuxième pièce isolante forme donc horizontalement également une entretoise entre les parties axiales des languettes 4,7 et on obtient, de manière connue en soi, ainsi par coopération de formes un blocage en rotation des pièces 6,7,3,4 et un positionnement des languettes 4,7 par la deuxième pièce isolante 3. En variante (figure 5) la douille 32, le trou du fond 12 et la creusure 61 peuvent être de forme cylindrique, la première pièce isolante 6 présentant latéralement un picot 63 traversant des trous complémentaires ménagés en coïncidence respectivement dans le fond 12, la languette 7 et le fond 34 de la pièce 3, pour blocage en rotation desdites pièces par coopération de formes.

La douille 11 porte également extérieurement un élément de sécurité 1 présentant une languette de sécurité 9 d'orientation axiale propre à établir un court-circuit en cas de surchauffe du corps d'allumage 10.

Dans le but de ne pas déstandardiser de manière profonde ce corps d'allumage 10 (et donc son bouchon ou sa fiche de courant associée), tout en ayant une bonne précision et une bonne maîtrise dans l'intervention de la languette de sécurité, l'invention propose d'établir un contact entre l'élément de sécurité 1 et la seconde pièce d'alimentation électrique 7, d'interposer l'ensemble seconde pièce d'alimentation électrique 7 - élément de sécurité 1, entre le fond 12 de la douille 11 et la seconde pièce d'isolation électrique 3 et, pour l'établissement d'un court-circuit, de faire coopérer la languette de sécurité 9 avec une partie de contact 8 reliée électriquement à la première pièce d'alimentation électrique 4.

Dans une forme de réalisation, (non visible), l'élément de sécurité 1 est interposé axialement entre la base de la languette 7, en contact avec le fond 12, et la face supérieure ou frontale du fond 34 de la seconde pièce isolante 3.

Dans les figures 3 à 6, l'élément de sécurité 1 est directement en contact avec la face externe du fond 12 de la douille 11 et la base de la languette 7, elle-même en contact avec le fond 34.

Ainsi cet élément de sécurité est plus sensible au flux thermique parcourant la douille 12 de grande surface.

Dans tous les cas, cet élément de sécurité est adjacent au fond 12 et est moins épais que la languette 7. Il constitue un contacteur bimétallique, ici de faible épaisseur pour être bien adapté à la température atteinte par la douille 11 en cas de surchauffe du corps d'allumage afin d'établir un court-circuit franc.

Dans les figures illustrées l'élément de sécurité a une forme d'équerre, avec une portion de support d'orientation horizontale au contact du fond 12 et de la base de la languette 7.

La portion de support s'étend donc parallèlement au fond et est prolongée, à la faveur d'un arrondi, par une languette de sécurité 9 proprement dite d'orientation axiale dirigée en direction opposée au fond 12.

La portion de support présente centralement au moins deux pattes d'orientation axiale 100 de faible longueur et dirigées axialement en direction opposée au fond 12.

Les pattes 100 s'engagent chacune par leur extrémité dans une creusure 33, que présente la face supérieure du fond 34 à la racine de la douille 32.

La portion de support de l'élément 1 est trouée centralement pour passage de la douille 32, les pattes 100 étant issues par découpe et pliage de la matière dudit trou central.

Ces pattes 100 sont engagées dans l'ouverture centrale de la base de la languette 7.

Grâce à ces pattes 100 en contact avec la douille 32, on peut bloquer en rotation l'élément de sécurité 1 et l'indexer angulairement. L'élément 1 est donc positionné par la pièce isolante 3.

La languette 9 traverse le fond 34 à la faveur d'une ouverture 90 de passage ménagée dans ledit fond 34.

L'ouverture 90 présente un chanfrein de dégagement au voisinage de la creusure 33 et de l'arrondi de raccordement de la languette 9 à sa portion de support.

L'autre bord de l'ouverture est délimité également par une surépaisseur de la ceinture 31, qui porte une saillie 91,92 dirigée vers l'axe de l'ensemble.

Cette saillie 91,92 est donc portée par la deuxième pièce isolante 3 en étant d'un seul tenant avec la surépaisseur de la ceinture 31.

La saillie 91,92, accessible par l'ouverture 90, présente une rampe 91 qui se termine par une zone d'appui ponctuelle 92 pour contact avec l'extrémité libre de la languette de sécurité 9.

Avantageusement cette languette 9 est montée sous précontrainte entre la saillie 91,92 et la douille 32.

La saillie 91,92 a donc une forme de coin (figures 3,4 et 5) obtenu par moulage à la faveur de l'ouverture 90.

Le montage de l'élément de sécurité 1 est ainsi aisé, du fait qu'il est indexé angulairement au niveau de ces pattes 100 et que la rampe 91 facilite le montage par enfilage de la languette 9 dans le trou 90, les pattes 100 étant coincées entre la douille 32 et le bord de l'ouverture centrale de la languette d'alimentation 7.

La face dorsale du fond 34, tournée du côté opposé à la douille 32, présente en surépaisseur une collerette 80 permettant le centrage de la partie de contact 8, consistant ici en une pièce distincte de la première languette 4 d'alimentation électrique.

La pièce 8 peut avoir ainsi l'épaisseur et la forme requises.

Cette pièce 8 est dans les figures illustrées en forme d'équerre avec une base horizontale en contact avec la base de la languette 4 et le fond 34.

On appréciera que la vis 2 permet donc l'assemblage des pièces 8 et 9 serrées entre la base de la languette 4 et le fond 12.

La pièce 8 est dotée d'un trou central pour enfilage sur la collerette 80 traversée par l'organe de fixation 2.

La base de la pièce 8 est prolongée par une partie d'orientation axiale s'étendant parallèlement à la languette de sécurité 9.

La pièce 8 est indexée angulairement afin que sa partie d'orientation axiale s'étende en vis-à-vis de la languette de sécurité 9. Pour ce faire la collerette 80 peut présenter un méplat propre à coopérer avec un méplat pratiqué dans l'ouverture de la base de la pièce 8.

Ainsi la pièce 8 est positionnée par la pièce isolante 3.

La partie axiale de la pièce 8, ainsi que la languette 9, est masquée par la ceinture 31 ménageant avec le fond 34 un logement borgne, ouvert vers l'extérieur, pour ces pièces 8 et 9 et la languette 4.

Ainsi aucun fils électrique ne peut venir en contact avec la languette 9 et la pièce de contact 8, sachant que l'allume-cigares est implanté dans le véhicule dans une région où sont présents de nombreux fils et câbles électriques.

En outre le connecteur, que l'on branche usuellement sur les languettes 4 et 7, plus longues que la ceinture 31, ne risque pas d'endommager les pièces 8 et 9.

Grâce à la saillie 91,92 un entrefer précis existe entre la languette 9 et la partie axiale de la pièce 8 centrée par la collerette 80. Le court-circuit sera ainsi assuré de manière fiable.

En fonctionnement normal la languette 9 est en contact avec l'appui 92 de la saillie 91,92 formant le sommet du coin.

Lorsqu'accidentellement les lames 51 du bilame 5 restent en prise avec la coupelle 50 du bouchon 40 de la figure 1, la douille 11 s'échauffe de manière anormale du fait que le corps de chauffage du bouchon reste alimenté, en sorte qu'à partir d'une température donnée, la languette de sécurité 9, formant contacteur bimétallique, s'écarte par contraction de son appui 92 pour venir en contact avec la partie axiale de la pièce de contact 8 et établir un court-circuit franc qui fait sauter un fusible de protection, éventuellement réarmable.

Dès que la température de la douille s'abaisse, la languette 8 se dilate pour retrouver sa position normale.

On notera que ce mouvement est limité de manière précise par l'appui 92.

Ainsi la languette 9 bimétallique retrouve sa position initiale, et ce de manière précise.

On appréciera que l'ouverture évasée 90 et la partie arrondie de raccordement de la languette 9 à sa portion de support favorisent le mouvement de la languette 9, qui peut être bombé pour contact local avec la pièce 8 comme visible en pointillés à la figure 5, afin d'éviter tout collage sur la pièce 8.

Ainsi qu'on l'aura compris c'est la chaleur de la douille 11, qui permet de mettre en action la languette de sécurité 9 pour établir le court-circuit franc. Cette douille peut atteindre des températures de l'ordre de 100° en cas de surchauffe du corps de chauffage du bouchon de l'allume-cigares.

On appréciera que grâce à la saillie 91,92 les tolérances sont réduites au bénéfice d'une meilleure précision.

Bien entendu la présente invention n'est pas limitée à l'exemple de réalisation décrit. Ainsi à la figure 5 le blocage en rotation de l'élément de sécurité 1 est réalisé à l'aide du picot 63 traversant la portion de support de l'élément de sécurité 1, la base de la languette 7 pour pénétrer dans un trou borgne non référencé pratiqué dans le fond 34.

Ce picot 63 issu de la première pièce isolante traverse le fond 12 en étant décalé axialement par rapport à l'organe de fixation 2, qui en variante peut consister en un rivet.

La douille 11 peut être emboutie localement vers l'extérieur au droit des languettes du bilame pour formation de protubérances 170 d'orientation axiale ménageant un espace autorisant un mouvement desdites languettes.

Ici les protubérances 170 ont en section une forme trapézoïdale.

Ainsi aucun fil ou câble ne peut venir en contact directement avec les lames du bilame.

On voit que l'invention s'applique à toutes sortes de douille. En particulier l'invention s'applique à un allume-cigares du type décrit dans le document EP-A-0 200 247 précité. Dans ce cas l'élément de prise de courant consiste en une languette portant un contact et le corps de chauffage est porté par la douille.

On appréciera également, grâce à la deuxième pièce isolante 3, que l'on peut aisément bloquer en rotation la pièce de contact 8.

Ainsi à la figure 6 on voit que la ceinture 31 présente deux rainures 36 pour montage de la partie axiale de la pièce 8 à la manière d'un tiroir, qui est ainsi positionnée par la pièce isolante 3, la base de la pièce de contact 8 étant enfilée sur la collerette 80.

On voit dans cette figure 6 en 37 la portion en forme de U de la ceinture 31 permettant un blocage en rotation de la languette 4 par coopération de formes.

Dans cette figure 6 par simplicité on n'a pas représenté la languette 4.

Bien entendu on notera à la figure 5 que la portion de support de l'élément de sécurité 1 peut être dépourvue des pattes 100 de la figure 3 du fait que cet élément 1 est indexé par le picot 63.

On appréciera que l'augmentation d'épaisseur de la ceinture 31 au niveau de la saillie 91,92 permet un bon soutien de la languette de sécurité 9.

A la figure 6 la languette 7 traverse le fond à la faveur d'une ouverture de forme rectangulaire pratiquée au voisinage de la ceinture 31. En variante la pièce de contact 8 peut être d'un seul tenant avec la languette 4 présentant alors au niveau de sa base une partie d'orientation axiale, pour contact avec la languette 9 en cas d'accident. Dans tous les cas l'élément 1 et la partie 8 sont positionnés par la pièce isolante 3.

A la figure 5 on a repéré en 38 les pattes élastiques de la bague conductrice de lumière 30 permettant, de manière connue en soi, un montage par clipsage sur la paroi 20 et en 39 une partie de support permettant le montage d'un porte-lampe pour éclairer la bague 30, qui porte de manière connue en soi la douille 11, par exemple à l'aide de crans engagés dans des ouvertures associées de la douille.

Bien entendu dans certains cas l'élément de sécurité peut présenter deux languettes de sécurité 9 et avoir la forme d'un U.

Les languettes 4 et 7 peuvent s'étendre parallèlement au fond 12. En variante les pièces d'alimentation électrique 4,7 peuvent consister en des broches.

La présence de la saillie 91,92 n'est pas obligatoire, la languette 9 pouvant contourner le fond 34. Dans ce cas, elle est apparente. Enfin la deuxième pièce isolante peut être d'un seul tenant avec la bague éclairante 30.

## Revendications

1. Corps d'allumage pour allume-cigares, notamment pour véhicules automobiles, comportant une douille (11) électriquement conductrice fermée par un fond (12), un organe de fixation (2) traversant ledit fond, un organe de prise de courant (5) monté à l'intérieur de la douille (11) et relié électriquement par l'organe de fixation (2) à une première pièce d'alimentation électrique (4) montée à l'extérieur de la douille (12), une première pièce d'isolation électrique (6) interposée entre l'organe de prise de courant (5) et le fond (12) de la douille (11), une seconde pièce d'alimentation électrique (7) montée à l'extérieur de la douille (11) en étant adjacente au fond (12) de celle-ci et reliée électriquement à ladite douille (11), une seconde pièce d'isolation électrique (3) interposée entre la première (4) et la seconde (7) pièce d'alimentation électrique, un élément de sécurité (1) présentant une languette de sécurité (9) globalement d'orientation axiale propre à établir un court-circuit en cas de surchauffe du corps d'allumage (10), ledit organe de fixation traversant les pièces d'isolation électrique (6,3) pour assemblage des pièces d'alimentation électrique (4,7) et de l'organe de prise de courant (5) avec la douille (11), caractérisé en ce que l'élément de sécurité (1) est en contact avec la seconde pièce d'alimentation électrique (7), en ce que l'ensemble seconde pièce d'alimentation électrique (7) - élément de sécurité (1) est interposé entre le fond (12) de la douille (11) et la seconde pièce d'isolation électrique (3) et en ce que, pour établissement d'un court-circuit, en cas de surchauffe du corps d'allumage (10) la languette de sécurité (9) est propre à coopérer avec une partie de contact (8) reliée électriquement à la première pièce d'alimentation électrique (4).

2. Corps d'allumage selon la revendication 1, caractérisé en ce que l'élément de sécurité (1) est en contact direct avec le fond (12) de la douille (11) en étant interposé axialement par l'intermédiaire d'un portion de support entre ledit fond (12) et la seconde pièce d'alimentation électrique (7).

3. Corps d'allumage selon la revendication 1 ou 2, caractérisé en ce que l'élément de sécurité (1) a une forme d'équerre avec une portion de support s'étendant parallèlement au fond (12) de la douille (11) et une partie d'orientation axiale constituant ladite languette de sécurité (9) et raccordée à ladite portion de support à la faveur d'un arrondi.

4. Corps d'allumage selon la revendication 3, dans lequel la seconde pièce d'isolation électrique (3) présente un fond (34) pour contact avec la seconde pièce d'alimentation électrique (7), caractérisé en ce que la languette de sécurité (9) traverse ledit fond (34) à la faveur d'une ouverture de passage (90).

5. Corps d'allumage selon la revendication 4, caractérisé en ce que l'ouverture de passage (90) est évasée au niveau de l'arrondi de raccordement de la languette de sécurité (9) avec sa portion de support.

6. Corps d'allumage selon l'une quelconque des revendications 1 à 5, caractérisé en ce que l'extrémité libre de la languette de sécurité (9) coopère avec une saillie (91,92) portée par la seconde pièce d'isolation électrique (3), ladite saillie étant dirigée vers l'axe de l'ensemble.

7. Corps d'allumage selon la revendication 6, caractérisé en ce que ladite saillie (91,92) est en forme de coin et présente à son sommet une zone d'appui ponctuelle (92) pour contact avec l'extrémité libre de la languette de sécurité (9).

8. Corps d'allumage selon la revendication 7, dans lequel la seconde pièce d'isolation électrique (3) présente un fond (34) prolongé vers l'extérieur, du côté opposé au fond (12) de la douille (11), par une ceinture d'orientation axiale (31), caractérisé en ce que ladite saillie (91,92) est portée par ladite ceinture (31).

9. Corps d'allumage selon la revendication 8, caractérisé en ce que ladite saillie (91,92) est formée à la faveur d'une surépaisseur de ladite ceinture (31).

10. Corps d'allumage selon la revendication 9, caractérisé en ce que ladite saillie (91,92) est accessible par l'intermédiaire d'une ouverture (90) pratiquée dans le fond (34) de la seconde pièce électriquement isolante (3) pour passage de la languette de sécurité (9).

11. Corps d'allumage selon l'une quelconque des revendications 1 à 10, caractérisé en ce que la partie de contact (8) comporte une partie d'orientation axiale parallèle à la languette de sécurité (9) pour contact avec celle-ci en cas de surchauffe du corps d'allumage (10).

12. Corps d'allumage selon l'une quelconque des revendications 1 à 11, caractérisé en ce que la partie de contact (8) et l'élément de sécurité (1) sont positionnés par la seconde pièce électriquement isolante (3).

13. Corps d'allumage selon l'une quelconque des revendications 1 à 12, caractérisé en ce que la partie de contact (8) consiste en une pièce de contact (8) distincte de la première pièce d'alimentation électrique (4).

14. Corps d'allumage selon la revendication 13, dans lequel la seconde pièce d'isolation électrique (3) présente un fond (34) avec une face dorsale tournée à l'opposé du fond (12) de la douille (11), caractérisé en ce que la pièce de contact (8) a une forme d'équerre avec une base serrée entre ledit fond (34) et une base de la première pièce d'alimentation électrique (3).

15. Corps d'allumage selon l'une quelconque des revendications 1 à 14, dans lequel la seconde pièce d'isolation électrique (3) présente un fond (34) prolongé vers l'extérieur, du côté opposé au fond (12) de la douille (11), par une ceinture d'orientation axiale, caractérisé en ce que ladite ceinture (31) masque la partie de contact (8) et la languette de sécurité (9).

## Claims

1. A lighter body for a cigar lighter, comprising an electrically conductive sleeve (11) closed by a base portion (12), a fastening member (2) extending through the said base portion, a current collecting member (5) mounted inside the sleeve (11) and connected electrically through the fastening member (2) to a first electrical supply member (4) which is mounted outside the sleeve (12), a first electrical insulating member (6) interposed between the current collecting member (5) and the base portion (12) of the sleeve (11), a second electrical supply member (7) mounted outside the sleeve (11) and being adjacent to the base portion (12) of the latter and connected electrically to the said sleeve (11), a second electrical insulating member (3) interposed between the first (4) and second (7) electrical supply members, a safety element (1) having a safety tongue (9) oriented generally axially and adapted to establish a short circuit in the event of overheating of the lighter body (10), the said fastening member extending through the electrical insulating members (6, 3) so as to assemble together the electrical supply members (4, 7) and current collection member (5) with the sleeve (11),
characterised in that the safety element (1) is in contact with the second electrical supply member (7),
in that the assembly consisting of the second electrical supply member (7) and the safety element (1) is interposed between the base portion (12) of the sleeve (11) and the second electrical insulating member (3),
and in that, in order to establish a short circuit in the event of overheating of the lighter body (10), the safety tongue (9) is adapted to cooperate with a contact portion (8) which is connected electrically to the first electrical supply member (4).

2. A lighter body according to Claim 1, characterised in that the safety element (1) is in direct contact with the base portion (12) of the sleeve (11) by being interposed axially, through a support portion, between the said base portion (12) and the second electrical supply member (7).

3. A lighter body according to Claim 1, characterised in that the safety element (1) is in the form of an angle piece, with a support portion extending parallel to the base portion (12) of the sleeve (11), and an axially oriented portion constituting the said safety tongue (9) and joined to the said support portion by means of a rounded portion.

4. A lighter body according to Claim 3, in which the second electrical insulating member (3) has a base portion (34) for contact with the second electrical supply member (7), characterised in that the safety tongue (9) extends through the said base portion (34) via an accommodation aperture (90).

5. A lighter body according to Claim 4, characterised in that the accommodation aperture (90) is flared at the level of the rounded portion which joins the safety tongue (9) to its support portion.

6. A lighter body according to Claim 1, characterised in that the free end of the safety tongue (9) cooperates with a projection (91, 92) carried by the second electrical insulating member (3), the said projection being directed towards the axis of the assembly.

7. A lighter body according to Claim 6, characterised in that the said projection (91, 92) is wedge shaped and defines at its apex a point contact zone (92) for contact with the free end of the safety tongue (9).

8. A lighter body according to Claim 7, in which the second electrical insulating member (3) has a base portion (34) extended outwardly, on the side opposite to the base portion (12) of the sleeve (11), by an axially oriented lug (31), characterised in that the said projection (91, 92) is carried by the said lug (31).

9. A lighter body according to Claim 8, characterised in that the said projection (91, 92) is formed in a portion of the said lug (31) having increased thickness.

10. A lighter body according to Claim 9, characterised in that the said projection (91, 92) is accessible through an aperture (90) formed in the base portion (34) of the second electrically insulating member (3) for accommodation of the safety tongue (9).

11. A lighter body according to Claim 1, characterised in that the contact portion (8) comprises an axially oriented portion parallel to the safety tongue (9), for contact with the latter in the event of overheating of the lighter body (10).

12. A lighter body according to Claim 1, characterised in that the contact portion (8) and the safety element (1) are positioned by the second electrically insulating member (3).

13. A lighter body according to Claim 1, characterised in that the contact portion (8) consists of a contact member (8) which is separate from the first electrical supply member (4).

14. A lighter body according to Claim 13, in which the second electrical insulating member (3) has a base portion (34) with a back surface facing away from the base portion (12) of the sleeve (11), characterised in that the contact member (8) is in the form of an angle piece having a base portion which is clamped between the said base portion (34) and a base portion of the first electrical supply member (3).

15. A lighter body according to any one of Claims 1 to 14, in which the second electrically insulating member (3) has a base portion (34) extended outwardly, on the side opposite to the base portion (12) of the sleeve (11), by an axially oriented lug, characterised in that the said lug (31) masks the contact portion (8) and the safety tongue (9).

## Patentansprüche

1. Anzünderkörper für Zigarettenanzünder, insbesondere für Kraftfahrzeuge, umfassend eine durch einen Boden (12) verschlossene elektrisch leitende Hülse (11), ein durch den besagten Boden hindurchgehendes Befestigungsorgan (2), ein Stromanschlußorgan (5), das im Innern der Hülse (11) angebracht und durch das Befestigungsorgan (2) mit einem außerhalb der Hülse (11) angebrachten ersten Stromzuleitungsteil (4) verbunden ist, ein zwischen dem Stromanschlußorgan (5) und dem Boden (12) der Hülse (11) eingefügtes erstes elektrisches Isolierteil (6), ein zweites Stromzuleitungsteil (7), das außerhalb der Hülse (11) angebracht ist, wobei es an deren Boden (12) angrenzt und mit der besagten Hülse (11) elektrisch verbunden ist, ein zwischen dem ersten (4) und dem zweiten (7) Stromzuleitungsteil eingefügtes zweites elektrisches Isolierteil (3), ein Sicherheitselement (1), das eine insgesamt axial ausgerichtete Sicherheitszunge (9) aufweist, die im Falle einer Überhitzung des Anzünderkörpers (10) einen Kurzschluß herstellen kann, wobei das besagte Befestigungsorgan für den Zusammenbau der Stromzuleitungsteile (4,7) und des Stromanschlußorgans (5) mit der Hülse (11) durch die elektrischen Isolierteile (6, 3) hindurchgeht, **dadurch gekennzeichnet,** daß das Sicherheitselement (1) mit dem zweiten Stromzuleitungsteil (7) in Kontakt steht, daß die Einheit zweites Stromzuleitungsteil (7) - Sicherheitselement (1) zwischen dem Boden (12) der Hülse (11) und dem zweiten elektrischen Isolierteil (3) eingefügt ist und daß zur Herstellung eines Kurzschlusses im Falle einer Überhitzung des Anzünderkörpers (10) die Sicherheitszunge (9) mit einem Kontaktteil (8) zusammenwirken kann, der mit dem ersten Stromzuleitungsteil (4) elektrisch verbunden ist.

2. Anzünderkörper nach Anspruch 1,**dadurch gekennzeichnet,** daß das Sicherheitselement (1) in direktem Kontakt mit dem Boden (12) der Hülse (11) steht, wobei es über einen Stützabschnitt axial zwischen dem besagten Boden (12) und dem zweiten Stromzuleitungsteil (7) eingefügt ist.

3. Anzünderkörper nach Anspruch 1 oder 2 , **dadurch gekennzeichnet,** daß das Sicherheitselement (1) eine Winkelform mit einem Stützabschnitt, der sich parallel zum Boden (12) der Hülse (11) erstreckt, und einem axial ausgerichteten Teil aufweist, der die besagte Sicherheitszunge (9) bildet und an den besagten Stützabschnitt mittels einer Abrundung angeschlossen ist.

4. Anzünderkörper nach Anspruch 3, in dem das zweite elektrische Isolierteil (3) einen Boden (34) für den Kontakt mit dem zweiten Stromzuleitungsteil (7) aufweist , **dadurch gekennzeichnet**, daß die Sicherheitszunge (9) durch den besagten Boden (34) mittels einer Durchgangsöffnung (90) hindurchgeht.

5. Anzünderkörper nach Anspruch 4,**dadurch gekennzeichnet,** daß die Durchgangsöffnung (90) in Höhe der Abrundung für den Anschluß der Sicherheitszunge (9) an ihren Stützabschnitt konisch erweitert ist.

6. Anzünderkörper nach einem der Ansprüche 1 bis 5, **dadurch gekennzeichnet**, daß das freie Ende der Sicherheitszunge (9) mit einem Vorsprung (91, 92) zusammenwirkt, der am zweiten elektrischen Isolierteil (3) angebracht ist, wobei dieser Vorsprung zur Achse der Einheit gerichtet ist.

7. Anzünderkörper nach Anspruch 6,**dadurch gekennzeichnet,** daß der besagte Vorsprung (91, 92) in Keilform ausgeführt ist und an seiner Spitze eine punktuelle Auflagezone (92) für den Kontakt mit dem freien Ende der Sicherheitszunge (9) aufweist.

8. Anzünderkörper nach Anspruch 7, in dem das zweite elektrische Isolierteil (3) einen Boden (34) aufweist, der nach außen, auf der dem Boden (12) der Hülse (11) abgewandten Seite, durch eine axial ausgerichtete Leiste (31) verlängert wird , **dadurch gekennzeichnet,** daß der besagte Vorsprung (91, 92) an der besagten Leiste (31) angebracht ist.

9. Anzünderkörper nach Anspruch 8,**dadurch gekennzeichnet,** daß der besagte Vorsprung (91, 92) mittels einer Erhebung der besagten Leiste (31) gebildet ist.

10. Anzünderkörper nach Anspruch 9 , **dadurch gekennzeichnet,** daß der besagte Vorsprung (91, 92) über eine Öffnung (90) zugänglich ist, die in den Boden (34) des zweiten elektrischen Isolierteils (3) für den Durchgang der Sicherheitszunge (9) eingearbeitet ist.

11. Anzünderkörper nach einem der Ansprüche 1 bis 10, **dadurch gekennzeichnet,** daß der Kontaktteil (8) einen axial ausgerichteten Teil parallel zur Sicherheitszunge (9) für den Kontakt mit dieser im Falle einer Überhitzung des Anzünderkörpers (10) aufweist.

12. Anzünderkörper nach einem der Ansprüche 1 bis 11, **dadurch gekennzeichnet,** daß der Kontaktteil (8) und das Sicherheitselement (1) durch das zweite elektrische Isolierteil (3) positioniert werden.

13. Anzünderkörper nach einem der Ansprüche 1 bis 12, **dadurch gekennzeichnet,** daß der Kontaktteil (8) aus einem vom ersten Stromzuleitungsteil (4) verschiedenen Kontaktteil (8) besteht.

14. Anzünderkörper nach Anspruch 13, in dem das zweite elektrische Isolierteil (3) einen Boden (34) mit einer entgegengesetzt zum Boden (12) der Hülse (11) gerichteten Rückseite aufweist , **dadurch gekennzeichnet,** daß das Kontaktteil (8) eine Winkelform mit einer Grundfläche hat, die zwischen dem besagten Boden (34) und einer Grundfläche des ersten Stromzuleitungsteils (3) eingespannt ist.

15. Anzünderkörper nach einem der Ansprüche 1 bis 14, in dem das zweite elektrische Isolierteil (3) einen Boden (34) aufweist, der nach außen, auf der dem Boden (12) der Hülse (11) entgegengesetzten Seite, durch eine axial ausgerichtete Leiste verlängert wird, **dadurch gekennzeichnet**, daß die besagte Leiste (31) den Kontaktteil (8) und die Sicherheitszunge (9) abdeckt.
